# EUROPÄISCHE PATENTSCHRIFT

(11) **EP 2 317 288 B1**
(45) Veröffentlichungstag und Bekanntmachung des Hinweises auf die Patenterteilung: **04.07.2012**
(21) Anmeldenummer: 10188796.6
(22) Anmeldetag: 26.10.2010
(51) Int. Cl.: G01F 1/66

(54) **Durchflussmengenmesseinrichtung mit Spiegel am Messrohrende**
Throughflow volume measuring device with mirror at the measuring tube end
Dispositif de mesure de quantités de débit doté d'un miroir à l'extrémité du tube de mesure

(30) Priorität: 27.10.2009 DE 202009014502 U
(43) Veröffentlichungstag der Anmeldung: 04.05.2011
(73) Patentinhaber: Körner, Hans-Holger, 23758 Oldenburg/Holstein (DE)
(72) Erfinder: Körner, Hans-Holger, 23758 Oldenburg/Holstein (DE)
(74) Vertreter: Glawe, Delfs, Moll

(56) Entgegenhaltungen:
- EP-A1- 1 798 528
- EP-A2- 1 693 652
- DE-B3- 10 327 076

## Beschreibung

Die Erfindung betrifft eine Durchflussmengenmesseinrichtung für fluide Medien, bei dem der Durchfluss entlang einer Messstrecke mit Hilfe von Ultraschall bestimmt wird.

Die Ausbreitungsgeschwindigkeit von bestimmten Wellen, insbesondere Schallwellen, in einem fluiden Medium ist abhängig von dessen relativer Geschwindigkeit. Diese Erscheinung nutzt man zur Durchflussmengenmessung. Eine entsprechende Durchflussmengenmesseinrichtung enthält eine von dem Fluid durchströmte Messstrecke, entlang derer die Laufzeit von Ultraschallwellen gemessen wird. Dadurch kann die Durchflussgeschwindigkeit und damit die Durchflussmenge des Fluid ermittelt werden.

Durchflussmengenmesseinrichtungen für fluide Medien, die Ultraschallwellen zur Durchflussmessung verwenden, sind aus dem Stand der Technik, beispielsweise der deutschen Patentschrift DE 103 27 076 B3, bekannt. Das Gerät enthält eine von dem Fluid durchströmte Messstrecke, an deren gegenüberliegenden Enden Umlenkspiegel vorgesehen sind. Über die Umlenkspiegel werden Schallwellen eines Ultraschallwandlers in die Messstrecke umgelenkt. Durch Laufzeitmessung einzelner Schallimpulse kann die Geschwindigkeit des Fluids in der Messtrecke ermittelt und daraus die Durchflussmenge errechnet werden. Die Umlenkspiegel werden durch Reflektoreinsätze gehalten. Die Position der Reflektoreinsätze und der darin gehaltenen Umlenkspiegel wird gegenüber dem Gehäuse oder dem Messrohr definiert.

Die Genauigkeit in der Position der Umlenkspiegel ist im Stand der Technik gering. Dadurch kann es zu Messungenauigkeiten kommen, die ein Hindernis bei der Einhaltung gesetzlicher Vorschriften und Normen darstellen.

Aufgabe der Erfindung ist es, eine Durchflussmengenmesseinrichtung zu schaffen, bei dem die Genauigkeit der Position der Umlenkspiegel gegenüber den im Stand der Technik bekannten Zählern erhöht wird.

Ausgehend vom eingangs genannten Stand der Technik wird diese Aufgabe gelöst durch eine Durchflussmengenmesseinrichtung gemäß dem Hauptanspruch. Vorteilhafte Weiterbildungen sind Gegenstand der abhängigen Ansprüche.

Demnach betrifft die Erfindung eine Durchflussmengenmesseinrichtung für fluide Medien mit einem Gehäuse, dessen Gehäuseinneres durch eine Gehäuseinnenwand begrenzt ist, einem innerhalb des Gehäuses angeordneten Messrohr, das eine Messstrecke für eine Laufzeitmessung bestimmt, und eine Ultraschallmesseinrichtung umfassend mindestens einen Ultraschallwandler zur Abstrahlung von Ultraschallwellen in das Gehäuseinnere und mindestens einen Umlenkspiegel an der Messtrecke mit einer Vorderseite, mittels der die Ultraschallwellen des Ultraschallwandlers in die Messtrecke umgelenkt werden, wobei wenigstens zwei, über den Umfang des Messrohres verteilte Befestigungszungen einstückig an wenigstens einem Ende des Messrohres angeformt sind und der mindestens eine Umlenkspiegel Befestigungsarme umfasst, die zum rastenden Eingreifen in an den Befestigungszungen vorgesehenen Aufnehmungen ausgebildet sind.

Indem erfindungsgemäß vorgesehen ist, dass der mindestens eine Umlenkspiegel direkt an mit dem Messrohr einstückig ausgebildeten Befestigungszungen verbunden ist, ist die Toleranzkette zwischen Messrohr und Umlenkspiegel geringer als im Stand der Technik, wodurch die Positionsgenauigkeit des Umlenkspiegels gegenüber dem Messrohr erhöht wird. Erfindungsgemäß ist zwischen Messrohr und Umlenkspiegel nämlich die Anzahl der Übergänge zwischen zwei Komponenten - die grundsätzlich toleranzbehaftet sind und sich damit negativ auf die Positionsgenauigkeit auswirken - stark reduziert. Sind die Befestigungsarme, wie bevorzugt, einstückig mit dem Umlenkspiegel ausgebildet, so beträgt die Anzahl der toleranzbehafteten Übergänge zwischen Messrohr und Umlenkspiegel nur noch eins.

Es ist bevorzugt, wenn an einem Ende des Messrohrs drei Befestigungszungen - vorzugsweise äquidistant - über den Umfang des Messrohres verteilt sind. Die Anzahl der Befestigungsarme am Umlenkspiegel beträgt dann vorzugsweise ebenfalls drei. Der Umlenkspiegel sowie die Befestigungsarme befinden sich im Strömungskanal für das zu messende Fluid. Durch die vorgenannte Anzahl an Befestigungszungen und - armen kann eine ausreichende Positionsgenauigkeit des Umlenkspiegels auch bei Umströmung desselben mit fluidem Medium gewährleistet werden, ohne dass ein unnötig hoher Strömungswiderstand erzeugt wird.

Wird für die Durchflussmengenmesseinrichtung an jedem Ende des Messrohrs jeweils ein Umlenkspiegel benötigt, so ist bevorzugt, wenn an beiden Enden des Messrohres Befestigungszungen vorgesehen sind. An den Befestigungszungen am einen Ende des Messrohrs kann dann der eine Umlenkspiegel, an den Befestigungszungen am anderen Ende des Messrohrs der andere Umlenkspiegel befestigt werden. Der erfindungsgemäße Vorteil der geringen Toleranzkette ist dann für beide Umlenkspiegel gültig.

Die Befestigungszungen sind bevorzugt parallel zur Messtrecke orientiert. Die einstückig am Messrohr angeformten Befestigungszungen ragen demnach nicht in den Strömungskanal für das Fluid. Der Strömungswiderstand in der Durchflussmengenmesseinrichtung wird durch die Befestigungszungen also nicht erhöht.

Es ist bevorzugt, wenn die Befestigungszungen mit ihrer Außenseite an der Gehäuseinnenwand anliegen. Während der Montage der erfindungsgemäßen Durchflussmengenmesseinrichtung lassen sich die Befestigungszungen vorzugsweise so elastisch nach Außen verbiegen, dass die Befestigungsarme eines Umlenkspiegels in die Ausnehmungen eingebracht werden können. Sobald die Befestigungsarme in Position befinden, kehren die Befestigungszungen in ihre Ausgangsposition zurück. Der Umlenkspiegel ist dann über seine Befestigungsarme in die Ausnehmungen der Befestigungszungen eingerastet. Wird das Messrohr anschließend in das Gehäuse eingeführt, wird durch das Anliegen der Befestigungszungen an der Gehäuseinnenwand ein erneutes elastisches Verbiegen der Befestigungszungen nach Außen verhindert. Die Rastverbindung zwischen Befestigungszungen und Befestigungsarmen wird so gesichert.

In einer Ausführungsform der Erfindung ist es bevorzugt, wenn an der Gehäuseinnenwand ein axialer Anschlag für das eine Ende des Messrohrs oder für wenigstens eine der an einem Ende des Messrohrs angeformten Befestigungszungen vorgesehen ist. Das Messrohr kann dann zusammen mit den daran befestigten Umlenkspiegeln durch eine dem Anschlag gegenüberliegende Öffnung in das Gehäuse eingeführt werden, bis es an dem axialen Anschlag zu liegen kommt. Durch den axialen Anschlag wird die axiale Position des Messrohr und der daran befestigten Umlenkspiegel definiert. In alternativen Ausführungsformen der Erfindung kann der Anschlag jedoch auch entfallen. Beispielsweise dann, wenn die Fixierung des Messrohrs durch einen Stift oder Temperaturfühler erfolgt, der durch eine Durchstecköffnung im Messrohr oder durch bzw. stoßend an eine der Befestigungszungen fluchtend mit einer entsprechenden Durchstecköffnung im Gehäuse eingeführt wird.

An wenigstens einer der Befestigungszungen kann eine Positionierungsnase vorgesehen sein, die zum Einrasten eine Ausnehmungen in der Gehäuseinnnenwand ausgebildet ist. Die Positionierungsnase ist dabei an der von der Messstrecke abgewandten Seite der Befestigungszunge angeordnet. Das Einrasten der Positionierungsnase in eine Ausnehmung in der Gehäuseinnenwand kann durch elastische Verformbarkeit der Befestigungszunge, an der die Positionierungsnase vorgesehen ist, erreicht werden. Über die Positionierungsnase lässt sich das Messrohr in axialer Richtung sichern, indem sie bspw. das Messrohr oder wenigstens eine der an dem einen Ende des Messrohrs angeformten Befestigungszungen gegen einen axialen Anschlag drückt. In diesem Fall ist die Positionierungsnase vorzugsweise an einer Befestigungszunge am von dem axialen Anschlag entgegen gesetzten Ende des Messrohrs vorgesehen.

Alternativ oder zusätzlich zur Positionierungsnase kann auch ein Leitblech vorgesehen sein, mit dem die axiale Position des Messrohrs gesichert werden kann. Das Leitblech kann starr und -nachdem es in dass Innere des Gehäuses eingebracht wird - darin verklemmt oder über einen Einrast-oder alternativen Mechanismus gesichert sein. Das Leitblech kann elastisch verformbar sein und drückt beispielsweise - nachdem es im verformten Zustand in das Innere des Gehäuses eingebracht wird und dort entspannt - gegen die Gehäuseinnenwand. Das Leitblech wird also im Inneren des Gehäuses verklemmbar. Das Leitblech kann so im Innern des Gehäuses verklemmt werden, dass es in Berührung mit dem Messrohr oder daran angeformten Befestigungszungen steht. Es ist auch möglich, dass das Leitblech sowohl gegen die Gehäuseinnenwand als auch eine Befestigungszunge des Messrohrs drückt. Das Leitblech wird also zwischen Gehäuseinnewand und einer Befestigungszunge verklemmt, wodurch das Messrohr in axialer Richtung gesichert wird. Handelt es sich bei der letztgenannte Befestigungszunge - wie bevorzugt - um eine mit einer Positionierungsnase, so kann ein unbeabsichtigtes Lösen der Rastverbindung zwischen Positionierungsnase und Ausnehmung in der Gehäuseinnenwand durch ein Leitblech wirksam verhindert werden. Neben der axialen Sicherung des Messrohrs dient das Leitblech auch der Strömungsberuhigung in der Durchflussmengenmesseinrichtung. Durch entsprechende Strömungsberuhigungen können insbesondere solche Störungen in der Fluidströmung, die das Messergebnis der Durchflussmengenmesseinrichtung verfälschen können - wie bspw. der sogenannte "Clockwise-Swirl" - verhindert werden.

Um die Winkellage des Messrohres im Gehäuse festzulegen, kann im Messrohr oder in einer der Befestigungszungen eine Durchstecköffnung vorgesehen sein, die bei einer korrekten Winkellage des Messrohrs im Gehäuse mit einer Durchstecköffnung im Gehäuse fluchtet. Es ist also bevorzugt im Messrohr oder einer Befestigungszunge und im Gehäuse jeweils eine Durchstecköffnung vorgesehen, die miteinander fluchtend sind. Es kann dann ein Temperaturfühler vorgesehen sein, der zur Fixierung der Winkellage durch die fluchtenden Durchstecköffnungen geführt ist. Mit dem Temperaturfühler kann darüber hinaus noch die Temperatur des durch die Durchflussmengenmesseinrichtung strömenden Fluids gemessen werden. Es ist aber auch möglich, dass zur Fixierung der Winkellage des Messrohr im Gehäuse ein durch die Durchstecköffnungen in Messrohr oder Befestigungszunge und Gehäuse geführten Stiftes vorgesehen ist. Durch die fluchtenden Durchstecköffnungen im Messrohr oder in einer Befestigungszunge und im Gehäuse kann auch eine Fixierung in axialer Richtung des Messrohrs sichergestellt werden. Bei dieser Art der Ausführungsform kann der oben erwähnte axiale Anschlag entfallen.

Die Befestigungsarme des Umlenkspiegels sind vorzugsweise parallel zu, weiter vorzugsweise in einer Ebene mit der Vorder- und/oder Rückseite seite des Umlenkspiegels orientiert. Dadurch wird die Produktion der Umlenkspiegel stark vereinfacht. Die Umlenkspiegel können in einem Arbeitsschritt aus einem flachen Halbzeug gestanzt oder gefräst werden.

Es ist bevorzugt, dass der Umlenkspiegel und/oder die Befestigungsarme eine strömungsoptimierte Form aufweisen. Dies bedeutet insbesondere, dass der durch den Umlenkspiegel und/oder die Befestigungsarme erzeugt Strömungswiderstand für das die Durchflussmengenmesseinrichtung durchströmende Fluid möglichst gering ist. Vorzugsweise sind daher Stirnflächen am Umlenkspiegel und/oder den Befestigungsarmen, die senkrecht zur Strömungsrichtung verlaufen, nicht vorhanden oder möglichst klein. Von besonderem Vorteil ist es, wenn die Besfestigungsarme des Umlenkspiegels parallel zu bzw. in einer Ebene mit der Rückseite des Umlenkspiegels orientiert sind. Im Unterschied zu den aus dem Stand der Technik bekannten Spiegel-Halter-Konstruktionen, beispielsweise der Haltevorrichtung in der eingangs genannten Patentschrift DE 103 27 076 B3 mit undefinierter Rückseite, setzt die erfindungsgemäße paralle Haltearm-Spiegel-Rückseite weniger Strömungswiderstand entgegen bzw. werden nahezu gleiche Anströmvorraussetzungen über die gesamte Spiegel-Halter-Anströmfläche geschaffen und ist weniger für störende Verwirbelungen an und in Nähe des Umlenkspiegels anfällig.

Es ist bevorzugt, wenn das Messrohr aus Kunststoff, der Umlenkspiegel aus Keramik gefertigt ist. Ein Messrohr aus Kunststoff lässt sich einfach und kostengünstig herstellen. Außerdem kann der Kunststoff so gewählt sein, dass eine evtl. benötigte Verformbarkeit insbesondere der am Messrohr angeformten Befestigungszungen erreicht wird. Der Kunststoff kann auch glasfaserverstärkt sein. Keramik weist gute Reflektionseigenschaften für Ultraschallwellen auf, weshalb es als Werkstoff für den Umlenkspiegel besonders geeignet ist.

Die Erfindung wird nun anhand vorteilhafter Ausführungsformen unter Bezugnahme auf die beigefügten Zeichnungen beispielhaft beschrieben. Es zeigen:
- Figur 1:: eine Schnittdarstellung einer ersten Ausführungs- form einer erfindungsgemäßen Durchflussmengen- messeinrichtung;
- Figur 2:: eine Seitenansicht der Durchflussmengenmessein- richtung aus Figur 1; und
- Figur 3:: eine Schnittdarstellung einer zweiten Ausfüh- rungsform einer erfindungsgemäßen Durchflussmen- genmesseinrichtung.

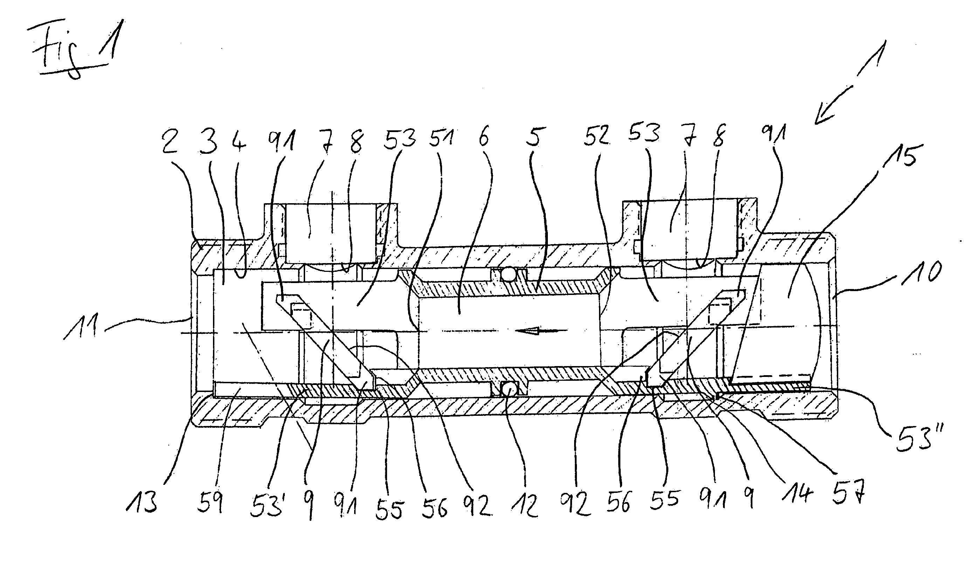

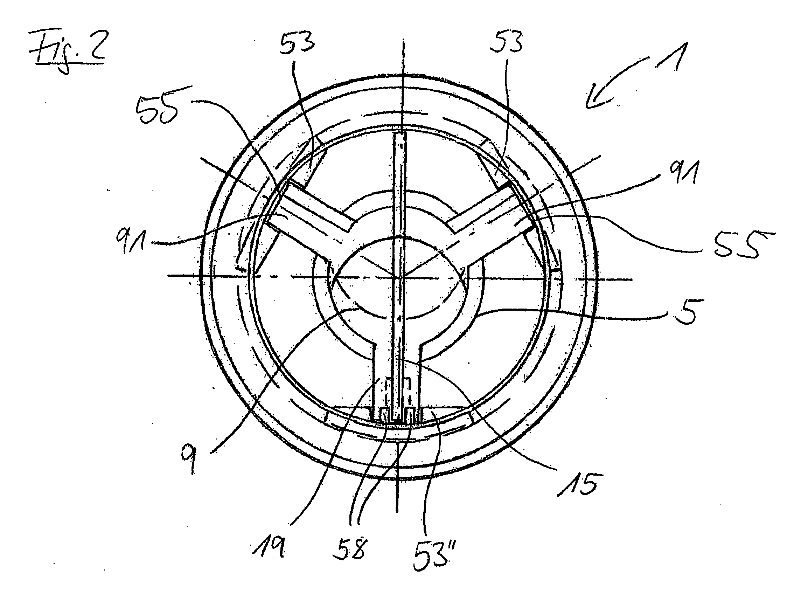

In Figur 1 ist eine Schnittdarstellung einer erfindungsgemäßen Durchflussmengenmesseinrichtung 1 wiedergegeben. Figur 2 zeigt die rechte Seitenansicht dieser Durchflussmengenmesseinrichtung 1 aus Figur 1.

Die Durchflussmengenmesseinrichtung 1 umfasst ein Gehäuse 2, dessen Gehäuseinneres 3 durch eine Gehäuseinnenwand 4 begrenzt ist. Innerhalb des Gehäuses 2 ist ein Messrohr 5 angeordnet, welches eine Messtrecke 6 für eine Laufzeitmessung bestimmt.
Die Durchflussmengenmesseinrichtung umfasst weiterhin zwei Ultraschallwandler 7, die so im Gehäuse 2 befestigt sind, dass die Ultraschallwandler 7 die Gehäuseinnenwand 4 mit ihrer aktiven Fläche 8 durchbrechen. Die aktive Fläche 8 der Ultraschallwandler 7 ist diejenige, an der Ultraschallwellen ausgesendet oder detektiert werden können. Die Ultraschallwandler 7 sind also so angeordnet, dass sie Ultraschallwellen in das Innere 3 des Gehäuses 2 aussenden und/oder aus dem Inneren 3 des Gehäuses stammende Ultraschallwellen detektieren können. Die Ultraschallwandler 7 senden ihre Ultraschallwellen in eine Richtung senkrecht zur Messtrecke 6 aus. Um die Ultraschallwellen so umzulenken, dass sie entlang der Messstrecke 6 verlaufen, sind Umlenkspiegel 9 vorgesehen, die später noch näher erläutert werden.

Das Gehäuse 2 weist eine Einlassöffnung 10 und eine Auslassöffnung 11 auf. Das zu messende Fluid wird durch die Einlassöffnung 10 in die Durchflussmengenmesseinrichtung 1 eingebracht und fließt durch das Messrohr 5 zur Auslassöffnung 11. Die Laufzeit von Ultraschallwellen von einem Ultraschallwandler 7 über die Umlenkspiegel 9 und entlang der Messtrecke 6 zum anderen Ultraschallwandler 7 verändert sich mit der Fließgeschwindigkeit des Fluids durch das Messrohr 5. Die Fließgeschwindigkeit lässt sich also durch Laufzeitmessung der Ultraschallwellen bestimmten. Mit Hilfe der Fließgeschwindigkeit durch das Messrohr 5 und Kenntnis der Geometrie des Messrohrs 5 - insbesondere des Innendurchmessers, der z.B. 11 mm betragen kann - lässt sich die Durchflussmenge bestimmen.

Das Messrohr 5 ist gegenüber der Gehäuseinnenwand 4 durch einen O-Ring 12 abgedichtet. Dadurch wird sichergestellt, das sämtliches Fluid von der Einlassöffnung 10 zur Auslassöffnung 11 durch das Messrohr 5 und damit entlang der Messtrecke 6 fließt. Messfehler durch Nebenströme, die nicht durch die Messeinrichtung detektiert werden können, werden so verhindert.

Die Umlenkspiegel 9 sind perspektivisch gesehen kreisrund und aus Keramik gefertigt. Sie weisen einstückig angeformte Befestigungsarme 91 auf. Der Durchmesser der Umlenkspiegel 9 beträgt perspektivisch gesehen jeweils 9 mm. Die Vorderseiten 92, mit denen die Ultraschallwellen umgelenkt werden, sind glatt geschliffen. Die Befestigungsarme 91 erstrecken sich in der Ebene der Vorderseite 92 des jeweiligen Umlenkspiegels 9 in radialer Richtung. Der Winkelabstand zwischen zwei benachbarten Befestigungsarmen 9 ist konstant.

Das Messrohr 5 weist an jedem seiner beiden Enden 51, 52 jeweils drei Befestigungszungen 53, 53', 53" auf, die äquidistant über den Umfang des Messrohres 5 verteilt angeordnet sind. Die Befestigungszungen 53, 53', 53" verlaufen parallel zum Messrohr 5 und ragen daher nicht in den Strömungskanal des Fluids. Der Strömungswiderstand der Durchflussmengenmesseinrichtung 1 wird durch die Befestigungszungen 53, 53', 53" also nicht erhöht.
Die Befestigungszungen 53, 53', 53 " weisen Ausnehmungen 55 auf, in welche die Befestigungsarme 91 der Umlenkspiegel einrasten können. Während der Montage der Umlenkspiegel 9 können die Befestigungszungen 53 so nach Außen elastisch gebogen werden, die Befestigungsarme 91 eines Umlenkspiegels 9 in die Ausnehmungen 55 der Befestigungszungen 53, 53', 53 " eingebracht werden können. Kehren die Befestigungszungen 53 anschließend in ihre Ausgangslage zurück, ist der Umlenkspiegel 9 mit seinen Befestigungsarmen 91 in den Ausnehmungen 55 an den Befestigungszungen 53, 53', 53" eingerastet.

Ist das Messrohr 5 in das Gehäuse 2 eingebracht, so liegen die Befestigungszungen 53, 53', 53" an der Gehäuseinnenwand 4 an. Eine elastische Verformung der Befestigungszungen 53, durch die die Rastverbindung zwischen Befestigungszungen 53, 53', 53" und den Befestigungsarmen 91 der Umlenkspiegel 9 gelöst werden könnte, wird dadurch sicher verhindert.

Neben den Ausnehmungen 55 können noch Anschläge 56 vorgesehen sein, gegen die sich die Befestigungsarme 91 abstützen können. Die Positionsgenauigkeit der Umlenkspiegel 9 kann dadurch - insbesondere bei Umströmung der Umlenkspiegel 9 mit Fluid - erhöht werden.

Im Bereich der Auslassöffnung 11 ist ein Anschlag 13 vorgesehen, gegen den eine Befestigungszunge 53' des einen Endes 51 des Messrohrs 5 im montierten Zustand der Durchflussmengenmesseinrichtung 1 zu liegen kommt. Während der Montage wird das Messrohr 5 zusammen mit den daran befestigten Umlenkspiegeln 9 durch die Einlassöffnung 10 des Gehäuses 2 geschoben, bis es mit der Befestigungszunge 53' des einen Endes 51 des Messrohrs 5 gegen den Anschlag 13 stößt. Durch den Anschlag 13 wird die axiale Position des Messrohrs 5 und damit auch der Umlenkspiegel 9 definiert.

Um das Messrohr 9 in seiner axialen Position zu sichern, ist an einer Befestigungszunge 53" des vom Anschlag 13 entgegen gesetzten Endes 52 des Messrohres 5 eine Positionierungsnase 57 vorgesehen. Die Positionierungsnase 57 ist an der, der Gehäuseinnenwand 4 zugewandten Seite des Befestigungszunge 53" angeordnet und eignet sich zum einrasten in einer Ausnehmung 14 in der Gehäuseinnenwand 4. Die eingerastete Positionierungsnase 57 sichert das Messrohr 5 in axialer Richtung gegen ein Verschieben in Richtung von der Ausflussöffnung 11 zur Einlassöffnung 10. In die andere Richtung ist das Messrohr 5 durch den Anschlag 13 gesichert. Um die Rastverbindung zwischen Positionierungsnase 57 und Ausnehmung 14 in der Gehäuseinnenwand 4 zu lösen, kann die Befestigungszunge 53" mit der Positionierungsnase 57 elastisch verformt werden.

Um ein unbeabsichtigtes Lösen der Rastverbindung zwischen Positionierungsnase 57 und Ausnehmung 14 in der Gehäuseinnenwand 4 zu verhindern, ist ein Leitblech 15 vorgesehen, welches sich zwischen der Befestigungszunge 53" mit der Positionierungsnase 57 und der Gehäuseinnenwand 4 verklemmen lässt. Das Leitblech kann starr oder elastisch verformbar sein. Bei einer elastischen Verformbarkeit des Leitblechs besteht eine Montage- oder Demontagemöglichkeit des Leitbleches 15 darin, dieses bei der Montage elastisch zu verformen, so dass das Leitblech 15 im montierten Zustand dann zu einem unverformten Zustand strebt und daher sowohl gegen die Gehäuseinnenwand 4 und die Befestigungszunge 53" mit der Positionierungsnase 57 drückt. An der Befestigungszunge 53" können Führungselemente 58 vorgesehen sein, die die Position des Leitbleches 15 an der Befestigungszunge 53" definieren. Das Leitblech 15 dient auch zur Strömungsberuhigung der Strömung des zu messenden Fluids durch die Durchflussmengenmesseinrichtung 1.

An einer Befestigungszunge 53' ist weiterhin eine Durchstecköffnung 59 vorgesehen. Die Durchstecköffnung 59 ist als einseitig offener Schlitz ausgeführt, der parallel zum Messrohr 5 verläuft. Ist die Durchstecköffnung 59 an der Befestigungszunge 53' fluchtend mit einer Durchstecköffnung (nicht dargestellt) im Gehäuse 2, so kann durch Einführung eines Stiftes eine Fixierung der Winkelposition des Messrohrs 5 und damit auch der Umlenkspiegel 9 erreicht werden. Um eine genaue Winkelfixierung zu erreichen, muss die Breite des Schlitzes an der Befestigungszunge 57 dem Durchmesser der Durchstecköffnung im Gehäuse 2 entsprechen und der Stift passgenau sein. Die Ausführung der Durchstecköffnung 59 als einseitig offener Schlitz bietet den Vorteil, dass ein vorheriges Entfernen des Stiftes bei Entnahme des Messrohrs 5 aus dem Gehäuse 2 nicht notwendig ist.

Anstelle eine Stiftes kann auch ein Temperaturfühler vorgesehen sein, mit dem die Temperatur des Fluids in der Durchflussmengenmesseinrichtung 1 ermittelt werden kann. Der Temperaturfühler kann dabei auch die Funktion des vorgenannten Stiftes zur Winkelfixierung des Messrohrs 5 erfüllen.

Das Messrohr 5 mit den angeformten Befestigungszungen 53, 53', 53" ist aus glasfaserverstärktem Kunststoff gefertigt. Das Gehäuse 2 ist aus Messing. Die Länge des Gehäuses 2 zwischen Einlassöffnung 10 und Auslassöffnung 11 beträgt bevorzugt 110 mm, 130 mm, 190 mm, 260 mm oder 300 mm.

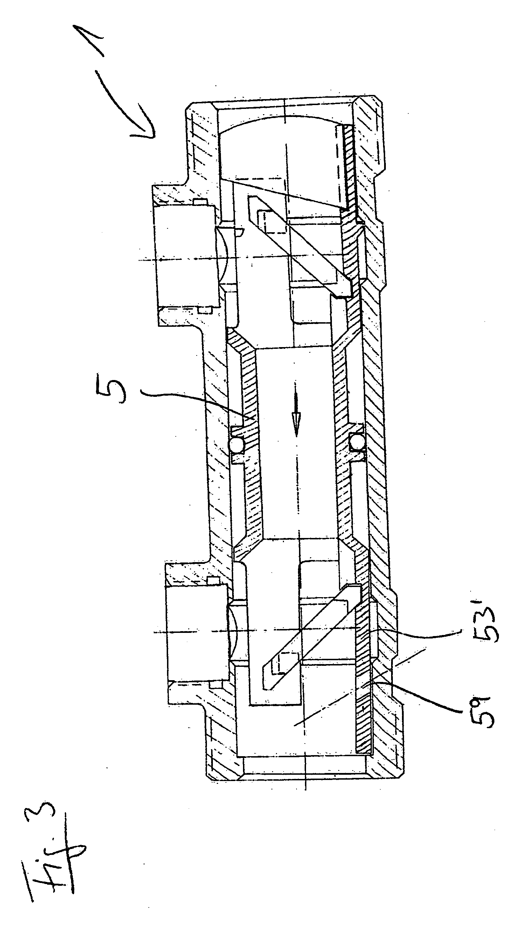

In Figur 3 ist ein zweites Ausführungsbeispiel einer erfindungsgemäßen Durchflussmengenmesseinrichtung 1 gezeigt. Dieses Ausführungsbeispiel ist in weiten Teilen dem Ausführungsbeispiel aus Figuren 1 und 2 identisch, weshalb auf die dortigen Ausführungen verwiesen wird und nachfolgend nur auf die Unterschiede eingegangen wird.

Das zweite Ausführungsbeispiel einer erfindungsgemäßen Durchflussmengenmesseinrichtung 1 ist die Durchstecköffnung 59 in einer Befestigungszunge 53' als Bohrung ausgeführt. Zur Winkelfixierung des Messrohres 5 durch einen Stift gilt das zum ersten Ausführungsbeispiel gemäß Figuren 1 und 2 gesagte. Die Ausführung der Durchstecköffnung 59 als Bohrung bietet jedoch den Vorteil, dass durch den Stift auch eine axiale Fixierung des Messrohres 5 erreicht werden kann. Allerdings ist vor einer Entnahme des Messrohres 5 aus dem Gehäuse 2 der Stift immer zu entfernen.
Der in dem ersten Ausführungsbeispiel im Bereich der Auslassöffnung 11 vorgesehene Anschlag 13, gegen den eine Befestigungszunge 53' des einen Endes 51 des Messrohrs 5 im montierten Zustand der Durchflussmengenmesseinrichtung 1 zu liegen kommt, kann in der in Figur 3 dargestellten Ausführungsform entfallen.

## Patentansprüche

1. Durchflussmengenmesseinrichtung (1) für fluide Medien mit einem Gehäuse (2), dessen Gehäuseinneres (3) durch eine Gehäuseinnenwand (4) begrenzt ist, einem innerhalb des Gehäuses (2) angeordneten Messrohr (5), das eine Messstrecke (6) für eine Laufzeitmessung bestimmt, und eine Ultraschallmesseinrichtung umfassend mindestens einen Ultraschallwandler (7) zur Abstrahlung von Ultraschallwellen in das Gehäuseinnere (3) und mindestens einen Umlenkspiegel (9) an der Messtrecke (6) mit einer Vorderseite (92), mittels der die Ultraschallwellen des Ultraschallwandlers (7) in die Messtrecke (6) umgelenkt werden, **dadurch gekennzeichnet, dass** wenigstens zwei, über den Umfang des Messrohres (5) verteilte Befestigungszungen (53, 53', 53") einstückig an wenigstens einem Ende (51, 52) des Messrohres (5) angeformt sind und der mindestens eine Umlenkspiegel (9) Befestigungsarme (91) aufweist, die zum Einrasten in an den Befestigungszungen (53, 53', 53") vorgesehenen Ausnehmungen (55) ausgebildet sind.

2. Durchflussmengenmesseinrichtung nach Anspruch 1,
**dadurch gekennzeichnet, dass** die Befestigungsarme (91) einstückig mit dem Umlenkspiegel (9) ausgebildet sind.

3. Durchflussmengenmesseinrichtung nach einem der vorhergehenden Ansprüche, **dadurch gekennzeichnet, dass** an einem Ende (51, 52) des Messrohrs (5) drei Befestigungszungen (53, 53', 53"), vorzugsweise äquidistant, über den Umfang des Messrohres (5) verteilt sind und der Umlenkspiegel (9) drei Befestigungsarme (92) aufweist.

4. Durchflussmengenmesseinrichtung nach einem der vorhergehenden Ansprüche, **dadurch gekennzeichnet, dass** an beiden Enden (51, 52) des Messrohres (5) Befestigungszungen (53, 53', 53") vorgesehen sind.

5. Durchflussmengenmesseinrichtung nach einem der vorhergehenden Ansprüche, **dadurch gekennzeichnet, dass** die Befestigungszungen (53, 53', 53") parallel zur Messstrecke (6) orientiert sind.

6. Durchflussmengenmesseinrichtung nach einem der vorhergehenden Ansprüche, **dadurch gekennzeichnet, dass** die Befestigungszungen (53, 53', 53") mit ihrer Außenseite an der Gehäuseinnenwand (4) anliegen.

7. Durchflussmengenmesseinrichtung nach einem der vorhergehenden Ansprüche, **dadurch gekennzeichnet, dass** an der Gehäuseinnenwand (4) ein axialer Anschlag (13) für ein Ende (51) des Messrohrs (5) oder für wenigstens eine der an einem Ende (51) des Messrohrs (5) angeformten Befestigungszungen (53') vorgesehen ist.

8. Durchflussmengenmesseinrichtung nach einem der vorhergehenden Ansprüche, **dadurch gekennzeichnet, dass** an wenigstens einer Befestigungszunge (53") eine Positionierungsnase (57) und an der Gehäuseinnenwand (4) eine Ausnehmung (14) vorgesehen ist, wobei die Positionierungsnase (57) in die Ausnehmung (14) einrastbar ist und die Positionierungsnase (57) vorzugsweise an einer Befestigungszunge (53") am von dem axialen Anschlag (13) entgegen gesetzten Ende (52) des Messrohr (5) vorgesehen ist.

9. Durchflussmengenmesseinrichtung nach einem der vorhergehenden Ansprüche, **dadurch gekennzeichnet, dass** ein Leitblech (15) zum Sichern des Messrohr (5) in dem Gehäuseinnenraum (3) vorgesehen ist, wobei das Leitblech (15) im Gehäuseinneren (3) verklemmbar, vorzugsweise zwischen Gehäuseinnenwand (4) und einer Befestigungszunge (53") mit Positionierungsnase (57) ist.

10. Durchflussmengenmesseinrichtung nach einem der vorhergehenden Ansprüche, **dadurch gekennzeichnet, dass** im Messrohr (5) oder einer Befestigungszunge (53') und im Gehäuse (2) jeweils eine Durchstecköffnung (59) vorgesehen ist, die miteinander fluchtend sind.

11. Durchflussmengenmesseinrichtung nach einem der vorhergehenden Ansprüche, **dadurch gekennzeichnet, dass** die Befestigungsarme (91) am Umlenkspiegel (9) parallel zu, vorzugsweise in einer Ebene mit der Vorder- und/oder Rückseite (92) des Umlenkspiegels (9) orientiert sind.

12. Durchflussmengenmesseinrichtung nach einem der vorhergehenden Ansprüche, **dadurch gekennzeichnet, dass** der Umlenkspiegel (9) und/oder die Befestigungsarme (91) eine strömungsoptimierte Form aufweist.

13. Durchflussmengenmesseinrichtung nach einem der vorhergehenden Ansprüche, **dadurch gekennzeichnet, dass** das Messrohr (5) aus Kunststoff und/oder der Umlenkspiegel (9) aus Keramik gefertigt ist.

## Claims

1. Flow-rate measuring device (1) for fluid media, having a housing (2) whose housing interior (3) is bound by a housing inner wall (4), a measurement tube (5) that is arranged inside the housing (2) and determines a measurement section (6) for a propagation-time measurement, and an ultrasonic measuring device comprising at least one ultrasonic transducer (7) for emitting ultrasonic waves into the housing interior (3), and at least one deflecting mirror (9) at the measurement section (6) and having a front side (92) by means of which the ultrasonic waves of the ultrasonic transducer (7) are deflected into the measurement section (6), **characterized in that** at least two fastening tabs (53, 53', 53") distributed over the circumference of the measurement tube (5) are integrally formed in one piece on at least one end (51, 52) of the measurement tube (5), and the at least one deflecting mirror (9) has fastening arms (91) which are designed to latch into cutouts (55) provided in the fastening tabs (53, 53', 53").

2. Flow-rate measuring device according to Claim 1, **characterized in that** the fastening arms (91) are designed in one piece with the deflecting mirror (9).

3. Flow-rate measuring device according to one of the preceding claims, **characterized in that** at one end (51, 52) of the measurement tube (5) three fastening tabs (53, 53', 53") are distributed, preferably equidistantly, over the circumference of the measurement tube (5), and the deflecting mirror (9) has three fastening arms (92).

4. Flow-rate measuring device according to one of the preceding claims, **characterized in that** fastening tabs (53, 53', 53") are provided at both ends (51, 52) of the measurement tube (5).

5. Flow-rate measuring device according to one of the preceding claims, **characterized in that** the fastening tabs (53, 53', 53'') orientated parallel to the measurement section (6).

6. Flow-rate measuring device according to one of the preceding claims, **characterized in that** the fastening tabs (53, 53', 53'') bear on their outside against the housing inner wall (4).

7. Flow-rate measuring device according to one of the preceding claims, **characterized in that** provided on the housing inner wall (4) is an axial stop (13) for an end (51) of the measurement tube (5), or for at least one of the fastening tabs (53') integrally formed at one end (51) of the measurement tube (5).

8. Flow-rate measuring device according to one of the preceding claims, **characterized in that** a positioning nose (57) is provided on at least one fastening tab (53"), and a cutout (14) is provided at the housing inner wall (4), it being possible to latch the positioning nose (57) into the cutout (14), and the positioning nose (57) preferably being provided on a fastening tab (53'') at the end (52) of the measurement tube (5) oppositely set from the axial stop (13).

9. Flow-rate measuring device according to one of the preceding claims, **characterized in that** a guide plate (15) is provided for securing the measurement tube (5) in the housing interior (3), it being possible to clamp the guide plate (15) in the housing interior (3), preferably between the housing inner wall (4) and a fastening tab (53") with positioning nose (57).

10. Flow-rate measuring device according to one of the preceding claims, **characterized in that** respectively provided in the measurement tube (5) or in a fastening tab (53') and in the housing (2) is an insert opening (59), said openings being aligned with one another.

11. Flow-rate measuring device according to one of the preceding claims, **characterized in that** the fastening arms (91) on the deflecting mirror (9) are orientated parallel to, preferably in one plane with the front and/or rear sides (92) of the deflecting mirror (9).

12. Flow-rate measuring device according to one of the preceding claims, **characterized in that** the deflecting mirror (9) and/or the fastening arms (91) have a flow-optimized shape.

13. Flow-rate measuring device according to one of the preceding claims, **characterized in that** the measuring tube (5) is produced from plastic, and/or the deflecting mirror (9) is produced from ceramic.

## Revendications

1. Dispositif de mesure de quantités de débits (1) pour des milieux fluides comportant un boîtier (2) dont l'intérieur de boîtier (3) est délimité par une paroi intérieure de boîtier (4), comportant un tube de mesure (5) disposé à l'intérieur du boîtier (2), lequel tube de mesure détermine pour une mesure du temps de transit un parcours de mesure (6), et un dispositif de mesure d'ultrasons comportant au moins un transducteur ultrasonore (7) servant à émettre des ondes ultrasonores à l'intérieur de boîtier (3) et comportant, sur le parcours de mesure (6), au moins un miroir de renvoi (9) comportant un côté avant (92), au moyen duquel les ondes ultrasonores du transducteur ultrasonore (7) sont réfléchies sur le parcours de mesure (6), **caractérisé en ce qu'**au moins deux languettes de fixation (53, 53', 53") réparties sur la périphérie du tube de mesure (5) sont formées d'un seul tenant sur au moins une extrémité (51, 52) du tube de mesure (5), et **en ce que** l'au moins un miroir de renvoi (9) présente des bras de fixation (91), qui sont réalisés pour s'enclencher dans les évidements (55) prévus au niveau des languettes de fixation (53, 53', 53'').

2. Dispositif de mesure de quantités de débits selon la revendication 1, **caractérisé en ce que** les bras de fixation (91) sont réalisés d'un seul tenant avec le miroir de renvoi (9).

3. Dispositif de mesure de quantités de débits selon l'une quelconque des revendications précédentes, **caractérisé en ce que** trois languettes de fixation (53, 53', 53") sont réparties au niveau d'une extrémité (51, 52) du tube de mesure (5), de préférence de manière équidistante, sur la périphérie du tube de mesure (5), et **en ce que** le miroir de renvoi (9) présente trois bras de fixation (92).

4. Dispositif de mesure de quantités de débits selon l'une quelconque des revendications précédentes, **caractérisé en ce que** des languettes de fixation (53, 53', 53") sont prévues au niveau des deux extrémités (51, 52) du tube de mesure (5).

5. Dispositif de mesure de quantités de débits selon l'une quelconque des revendications précédentes, **caractérisé en ce que** les languettes de fixation (53, 53', 53") sont orientées de manière parallèle par rapport au parcours de mesure (6).

6. Dispositif de mesure de quantités de débits selon l'une quelconque des revendications précédentes, **caractérisé en ce que** les languettes de fixation (53, 53', 53") reposent avec leur côté extérieur au niveau de la paroi intérieure du boîtier (4).

7. Dispositif de mesure de quantités de débits selon l'une quelconque des revendications précédentes, **caractérisé en ce qu'**une butée (13) axiale est prévue au niveau de la paroi intérieure du boîtier (4) pour une extrémité (51) du tube de mesure (5) ou pour au moins une des languettes de fixation (53') formées au niveau d'une extrémité (51) du tube de mesure (5).

8. Dispositif de mesure de quantités de débits selon l'une quelconque des revendications précédentes, **caractérisé en ce qu'**un ergot de positionnement (57) est prévu au niveau d'au moins une languette de fixation (53"), et **en ce qu'**un évidement (14) est prévu au niveau de la paroi intérieure du boîtier (4), sachant que l'ergot de positionnement (57) peut être enclenché dans l'évidement (14) et que l'ergot de positionnement (57) est prévu de préférence au niveau d'une languette de fixation (53") au niveau de l'extrémité (52) du tube de mesure (5) opposée à la butée (13) axiale.

9. Dispositif de mesure de quantités de débits selon l'une quelconque des revendications précédentes, **caractérisé en ce qu'**un déflecteur (15) servant à bloquer le tube de mesure (5) dans l'habitacle de boîtier (3) est prévu, sachant que le déflecteur (15) peut être coincé avec des ergots de positionnement (57) à l'intérieur du boîtier (3), de préférence entre la paroi intérieure du boîtier (4) et une languette de fixation (53'').

10. Dispositif de mesure de quantités de débits selon l'une quelconque des revendications précédentes, **caractérisé en ce qu'**une ouverture de passage (59) est respectivement prévue dans le tube de mesure (5) ou dans une languette de fixation (53') et dans le boîtier (2), lesquelles sont alignées entre elles.

11. Dispositif de mesure de quantités de débits selon l'une quelconque des revendications précédentes, **caractérisé en ce que** les bras de fixation (91) sont orientés au niveau du miroir de renvoi (9) de manière parallèle, de préférence sont orientés dans un plan avec le côté avant et/ou arrière (92) du miroir de renvoi (9).

12. Dispositif de mesure de quantités de débits selon l'une quelconque des revendications précédentes, **caractérisé en ce que** le miroir de renvoi (9) et/ou les bras de fixation (91) présentent une forme optimisée pour l'écoulement.

13. Dispositif de mesure de quantités de débits selon l'une quelconque des revendications précédentes, **caractérisé en ce que** le tube de mesure (5) est fabriqué à partir d'une matière synthétique, et/ou **en ce que** le miroir de renvoi (9) est fabriqué à partir de céramique.
